# EUROPEAN PATENT SPECIFICATION

(11) **EP 2 629 170 B1**
(45) Date of publication and mention of the grant of the patent: **13.07.2016**
(21) Application number: 12155984.3
(22) Date of filing: 17.02.2012
(51) Int. Cl.: G06F 1/16, G06F 3/01

(54) **Electronic device and method of controlling same**
Elektronische Vorrichtung und Steuerungsverfahren dafür
Dispositif électronique et son procédé de commande

(43) Date of publication of application: 21.08.2013
(73) Proprietor: BlackBerry Limited, Waterloo, ON N2K 0A7 (CA)
(72) Inventor: Pasquero, Jerome, Waterloo Ontario N2L 3W8 (CA); Walker, David Ryan, Waterloo Ontario N2L 3W8 (CA); McKenzie, Donald, Somerset, McCulloch, Waterloo Ontario N2L 3W8 (CA)
(74) Representative: Moore, Barry

(56) References cited:
- WO-A1-2006/046098
- WO-A2-2009/071336
- US-A1- 2008 165 022

## Description

### FIELD OF TECHNOLOGY

The present disclosure relates to electronic devices including, but not limited to, portable electronic devices and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive input device, such as a touchscreen display, is particularly useful on handheld devices, which are small and may have limited space for user input and output. Improvements in electronic devices with displays are desirable.

International Publication No. WO 2009/071336 to Luiro et al. discloses a portable apparatus that comprises input means arranged to receive user input comprising of one or more taps on the portable apparatus. The apparatus is able to detect the taps on the portable apparatus and to determine at least one location of the taps on the portable apparatus. The apparatus is further able to define an imaginary key on the apparatus on the determined location.

### SUMMARY

Accordingly the present teaching provides a method of controlling an electronic device in accordance with claim 1. Advantageous features are defined in the dependent claims.

Accordingly the present teaching provides a computer-readable medium in accordance with claim 9.

Accordingly the present teaching provides an electronic device in accordance with claim 10. Advantageous features are defined in the dependent claims.

### BRIEF DESCRIPTION OF THE DRAWINGS

Embodiments of the present disclosure will now be described, by way of example only, with reference to the attached figures, wherein:
FIG. 1 is a block diagram of an example of a portable electronic device in accordance with the disclosure;
FIG. 2 is a flowchart illustrating a method of controlling an electronic device in accordance with the disclosure;
FIG. 3 is a front view of an example of a portable electronic device in accordance with the disclosure;
FIG. 4 is a side view of an example of the portable electronic device of FIG. 3; and
FIG. 5 is a back view of the portable electronic device of FIG. 3.

### DETAILED DESCRIPTION

The following describes an electronic device and a method that includes detecting a touch at at least one of a plurality of hardware components of the electronic device, identifying a function associated with the at least one of the hardware components, and performing the function at the electronic device.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, PDAs, wirelessly enabled notebook computers, tablet computers, and so forth. The portable electronic device may also be a portable electronic device without wireless communication capabilities, such as a handheld electronic game device, digital photograph album, digital camera, or other device.

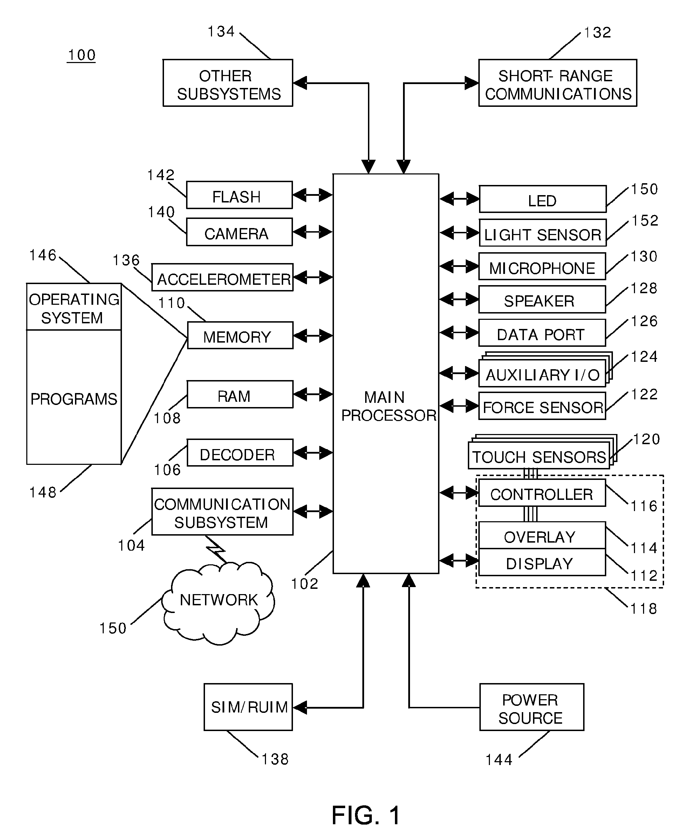

A block diagram of an example of a portable electronic device 100 is shown in FIG. 1. The portable electronic device 100 includes multiple components, such as a processor 102 that controls the overall operation of the portable electronic device 100. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 160. The wireless network 160 may be any type of wireless network, including, but not limited to, data wireless networks, voice wireless networks, and networks that support both voice and data communications. A power source 144, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more touch sensors 120, an auxiliary input/output (I/O) subsystem 124, a data port 126, a speaker 128, a microphone 130, short-range communications 132, and other device subsystems 134. User-interaction with a graphical user interface may be performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 to detect direction of gravitational forces or gravity-induced reaction forces so as to determine, for example, the orientation of the portable electronic device 100. The processor may also interact with a camera 140 and a flash 142 that is utilized with the camera 140. A light-emitting diode (LED) 150 may also be coupled to the processor 102 to provide notifications. For example, the LED 150 may be utilized for notification of a received email, a calendar event, a low battery condition, or any other suitable condition or event. A light sensor 152 may also be coupled to the processor 102 to detect ambient light conditions.

To identify a subscriber for network access, the portable electronic device 100 uses a Subscriber Identity Module or a Removable User Identity Module (SIM/RUIM) card 138 for communication with a network, such as the wireless network 160. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 160, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 160 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. When a touch begins, one or more signals are provided to the controller 116 and the origin of the touch may be determined from the signals. The origin may be a point or an area, for example. Signals may be provided to the controller at regular intervals in time for a touch, also known as sampling, such that changes in location of the touch may be detected. A touch may be detected from any suitable input member, such as a finger, thumb, appendage, or other objects, for example, a stylus, pen, or other pointer, depending on the nature of the touch-sensitive display 118. The controller 116 and/or the processor 102 may detect a touch by any suitable input member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A hover may be a touch at a location that is generally unchanged over a period of time or is associated with the same selection item for a period of time.

An optional force sensor 122, or force sensors, may be disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch sensor(s) 120 are disposed at one or more locations associated with functional components of the portable electronic device 100. The functional components may include, for example, the speaker 128, the microphone 130, the data port 126, the camera 140, the flash 142, the LED 150, the light sensor 152, and so forth. The term functional components, as utilized herein, includes components other than the touch-sensitive display118 and does not include the touch-sensitive display 118. The touch sensors 120 may be any suitable touch sensors, such as capacitive, infrared, optical imaging, dispersive signal technology, acoustic pulse recognition, and so forth, as known in the art.

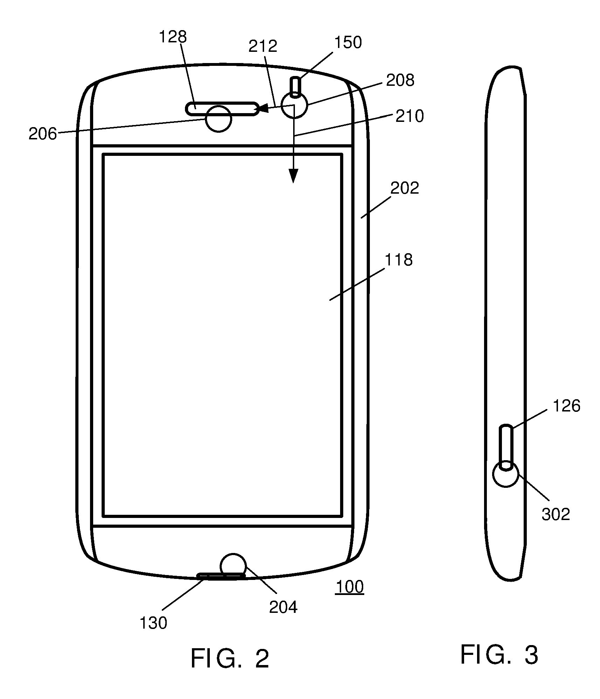

Views of an example of the electronic device 100 are shown in FIG. 2, FIG. 3, and FIG. 4. The electronic device 100 includes a housing 202 that is utilized to enclose components such as the components shown in FIG. 1. For the purposes of the example of FIG. 2 through FIG. 4, touch sensors are disposed at locations associated with each of the functional components, including the speaker 128, the microphone 130, the data port 126, the camera 140, the flash 142, the LED 150, and the light sensor 152. The touch sensors 120 are disposed on the housing 202 of the portable electronic device 100, at portions of the housing 202 covering the functional components or near the functional components. For example, a touch sensor 120 is disposed on the housing 202, adjacent the opening in the housing 202 for the speaker 128. Similarly, a touch sensor 120 is disposed on the housing 202, adjacent the opening for the microphone 130. A touch sensor 120 is disposed on a portion of the housing 202 that covers the LED 150 and light sensor 152. A touch sensor 120 is disposed on a portion of the housing 202 that covers the flash 142. A touch sensor 120 is disposed on a portion of the housing 202 adjacent to the camera 140. A touch sensor 120 is disposed on a portion of the housing 202 around the data port 126.

As indicated above, the touch sensors 120 may be any suitable touch sensors. For the purpose of the example illustrated in FIG. 2 through FIG. 4, the touch-sensors are capacitive touch sensors. The capacitive touch sensors 120 may be indium tin oxide (ITO), or other conductive material, depending on the location of the capacitive touch sensors and the nature of the functional component. For example, a touch sensor disposed on a part of the housing 202 that covers the LED 152 and light sensor 152 may be ITO to facilitate transmission of light. Other touch sensors 120 or multiple different touch sensor types may be utilized, however. The touch sensors 120 may be coupled to the controller 116 to control the capacitive touch sensors 120 and to detect the touch at the hardware components. When a touch is detected utilizing one of the capacitive touch sensors 120, a signal is provided by the controller 116 to the processor 102.

A touch associated with a hardware component may be detected utilizing one or more of the touch sensors 120. The processor 102 may determine a location of a touch based on the touch sensor 120 at which the touch is detected. When a touch is detected utilizing one of the touch sensors 120, a signal is provided to the controller 116. Signals may be provided to the processor 102 at regular intervals in time for a touch such that duration or an end of the touch may be determined or detected.

Optionally, multiple touch sensors may be associated with a functional component such that changes in touch location may be detected. For example, multiple touch sensors may be associated with the LED such that a gesture starting or ending at the LED and a direction of the gesture may be detected.

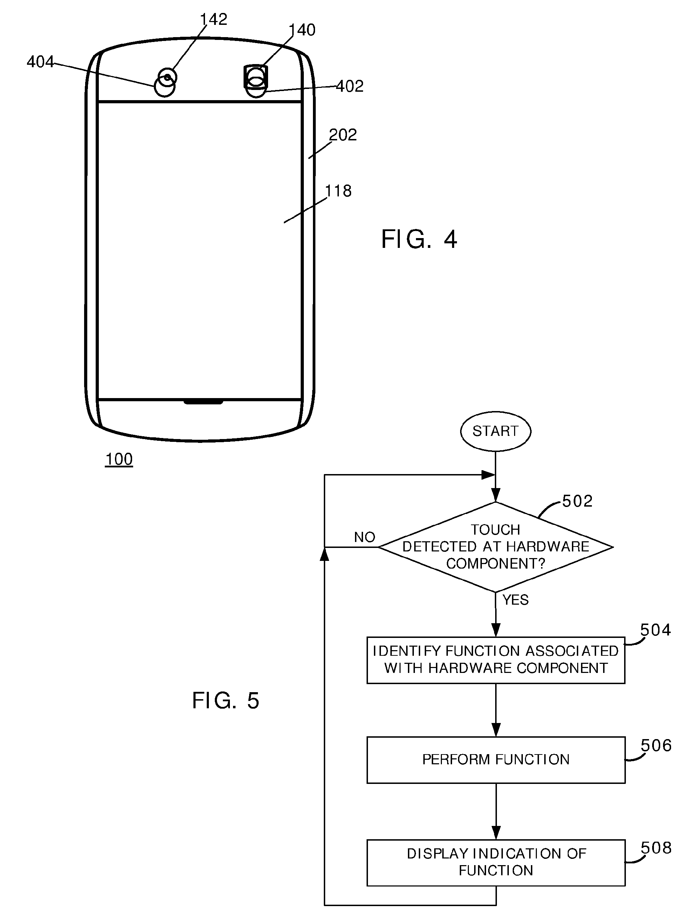

A flowchart illustrating a method of controlling an electronic device is shown in FIG. 5. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

When a touch is detected at a hardware component at 502, the process continues at 504. The touch is detected at a hardware component utilizing the associated sensor or sensors 120. A touch may be associated with more than one hardware component. For example, a touch may be detected at a first hardware component, followed by a touch at a second hardware component. The detected touches may be determined to be a single touch associated with both hardware components, for example, depending on the time between detecting the touches. A touch may also be detected at a hardware component followed by a touch on the touch-sensitive display 118. The detected touches may be determined to be a single touch associated with the hardware component, depending on the time between detecting the touches.

A function that is associated with the hardware component, or hardware components, is identified at 504. The function may be identified utilizing any suitable method of associating functions with touches. For example, the function may be identified utilizing a look-up table. Multiple functions may be associated with the hardware component or components and the associated function may be based on or dependent on any suitable factors. For example, the associated function may be based on touch attributes such as the time the touch is detected, and/or the duration of the touch. The function may also be dependent on the application running on the portable electronic device 100 at the time the touch is detected.

For a device with multiple touch sensors associated with a functional component, the function may be dependent on a direction of a gesture, length of the gesture, or any other suitable factor.

The function is performed at 506. An indication of the function may be displayed on the touch-sensitive display 508.

Reference is again made to FIG. 3 through FIG. 6 to describe examples of control of the portable electronic device 100. In the present example, a tap, which is a touch of duration that is less than or equal to a threshold period of time, at the location identified by the circle 204 in FIG. 2 is detected at 502. The tap is associated with the microphone 130 and mutes or unmutes the microphone input during voice communication. The function of muting/unmuting is identified at 504 and the microphone input is muted or unmuted at 506. A visual indicator such as a representation of a microphone with or without a line through the microphone may be displayed on the touch-sensitive display 118 at 508 to indicate that the microphone is muted or unmuted.

A tap at the location identified by the circle 206 in FIG. 2 is detected at 502. The tap is associated with the speaker 128 and switches between speaker phone mode and a handset mode, i.e., turns on and off the speakerphone, during voice communication. The function of switching between speakerphone and handset mode is identified at 504 and the speakerphone is turned on or off at 506. A representation of a speaker may be displayed or display of the representation of the speaker may be discontinued at 508 when the speakerphone is turned on or off.

A tap at the location identifed by the circle 208 in FIG. 2 is detected at 502. The tap is associated with the LED 150 and is utilized to turn on or off notifications utilizing the LED 150. The function of turning on or off notifications is identified at 504 and the notifications are turned on or off at 506. At 508, the display 118 may display an indicator that the notifications are turned off or may discontinue display of the indicator when the notifications are turned on.

A gesture that begins at the location identified by the circle 208 and continues along the path indicated by the arrow 210 is first detected utilizing the touch sensor associated with the LED 150 and, within a threshold period of time of detecting the touch utilizing the touch sensor associated with the LED 150, the touch is detected by the touch-sensitive display 118. The gesture is detected at 502 based on the detection of the touch at the location associated with the LED 150 followed by the detection of the touch by the touch-sensitive display 118. The gesture is utilized to display the most-recently received message on the touch-sensitive display 118. The function of displaying the most-recently received message is identified at 504 and the message is displayed at 506. Optionally, the message may be displayed with an indication that the message is the last message received.

A gesture that begins at the location identified by the circle 208 and continues along the path indicated by the arrow 212 is first detected utilizing the touch sensor associated with the LED 150 and, within a threshold period of time of detecting the touch utilizing the touch sensor associated with the LED 150, the touch is detected utilizing the touch sensor associated with the speaker 128. The gesture is detected at 502 based on the detection of the touch at the location associated with the LED 150 followed by the detection of the touch at the location associated with the speaker. The gesture is utilized to read the most recently received message out loud, for example, utilizing text to speech software. The function of reading the most-recently received message is identified at 504 and the message is played at 506. Optionally, the message may be played with an indication that the message is the last message received.

A touch at the location identified by the circle 302 in FIG. 3 is detected at 502. The touch is associated with the data port 126. For the purpose of the present example, the data port 126 is also utilized to charge the batteries, referred to as the power source 144. When the touch is detected, the function of displaying a battery level status is identified at 504 and the battery level status is displayed on the touch-sensitive display 118 at 506. For example, a percentage representing battery charge may be displayed. A representation of a battery may also be displayed.

A tap at the location identified by the circle 402 in FIG. 4 is detected at 502. The touch is associated with the flash 142 that is utilized with the camera 140. When the touch is detected while a camera application is running on the portable electronic device 100, the function of enabling or disabling the flash 142 is identified at 504 and the flash 142 is enabled or disabled at 506. A visual indicator such as a representation of a flash with or without a line through the flash may be displayed on the touch-sensitive display 118 at 508 to indicate that the flash 142 is disabled or enabled.

When the touch is detected while the camera application is not running on the portable electronic device 100, the function of turning on the flash 142 for use as a light source is identified at 504 and the flash 142 is turned on at 506. Optionally, a visual indicator such as a representation of a flashlight may be displayed on the touch-sensitive display 118.

A tap at the location identified by the circle 404 is detected at 502. The touch is associated with the camera 140. When the touch is detected, the function of launching a camera application or closing a camera application is identified at 504 and the camera application is launched or is closed at 506. The touch-sensitive display 118 may be utilized as a viewfinder and the camera view is displayed on the touch-sensitive display 118 when the camera application is launched. Other indicators that the camera application is launched may also be displayed.

The touches and associated functions described with reference to FIG. 2 through FIG. 4 are examples of control of the portable electronic device 100. Other touches and associated functions may be utilized. For example, a touch, which may be a tap or a swipe, at a location associated with the SIM/RUIM card may be utilized to turn off wireless communications to switch to, for example, an airplane mode, or to switch between wireless communication modes, for example, between Wi-Fi™ and cellular communication modes.

Additionally, a button on the portable electronic device 100 or a virtual button on the touch-sensitive display 118 may be depressed or touched before, after, or during the touch on the touch sensor at the functional component to reduce the chance of functions being performed as a result of inadvertent touches or confirm the touch at the functional component.

In the examples described above, the touches are detected utilizing capacitive touch sensors 120 that are disposed at locations associated with the functions components. Alternatively, the microphone 130 may be utilized to detect a touch by detecting a sound generated by a tap on the housing 202. Alternatively, or in addition, the accelerometer 136 may be utilized to detect a touch by detecting the acceleration induced by a tap on the housing 202.

Utilizing the method of the present disclosure, touches associated with functional components may be utilized to invoke or perform functions at the electronic device. Thus, functions that are associated with the functional components may be selected without the use of multiple additional buttons on the electronic device and without the use of menus and submenus displayed on the touch-sensitive display.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method of controlling an electronic device (100) comprising a touch-sensitive display (118) and a plurality of functional components (128, 130, 126, 140, 142, 150, 152), the method comprising:
detecting a touch at at least one of the functional components (128, 130, 126, 140, 142, 150, 152) of the electronic device (100);
identifying a function associated with the at least one of the functional components (128, 130, 126, 140, 142, 150, 152); and
performing the function at the electronic device (100).

2. The method according to claim 1, comprising displaying an indication of the function on the touch-sensitive display (118).

3. The method according to claim 1 or 2, wherein detecting the touch comprises one of:
detecting the touch utilizing capacitive touch sensors (120) of the electronic device (100);
detecting a touch on a portion of the housing (202) near the at least one functional component (128, 130, 126, 140, 142, 150, 152);
detecting a tap utilizing at least one of a capacitive touch sensor (120), an accelerometer (136), and a microphone (130).

4. The method according to claim 1 or 2, wherein detecting the touch comprises detecting the touch at two of the functional components (128, 130, 126, 140, 142, 150, 152).

5. The method according to claim 4, wherein detecting the touch at two of the functional components (128, 130, 126, 140, 142, 150, 152) comprises detecting a gesture from a first one of the functional components (128, 130, 126, 140, 142, 150, 152) to a second one of the functional components (128, 130, 126, 140, 142, 150, 152).

6. The method according to any preceding claim, wherein identifying the function comprises identifying the function based on touch attributes.

7. The method according to any preceding claim, comprising detecting a touch at a button prior to performing the function and, wherein the function is performed in response to detecting the touch at the button and detecting the touch at the at least one of the functional components (128, 130, 126, 140, 142, 150, 152), and optionally wherein detecting the touch at the button comprises detecting actuation of a switch of the button.

8. The method according to any preceding claim, comprising detecting a touch at a virtual button on the touch-sensitive display (118) prior to performing the function and, wherein the function is performed in response to detecting the touch at the button and detecting the touch at the at least one of the functional components (128, 130, 126, 140, 142, 150, 152).

9. A computer-readable medium (110) having computer-readable code executable by at least one processor (102) of the electronic device (100) to perform the method of any preceding claim.

10. An electronic device (100) comprising:
a touch-sensitive display (118);
a plurality of functional components (128, 130, 126, 140, 142, 150, 152); and
a processor (102) coupled to the touch-sensitive display (118) and to the functional components (128, 130, 126, 140, 142, 150, 152) and operable to detect a touch at at least one of the functional components (128, 130, 126, 140, 142, 150, 152) of an electronic device (100), identify a function associated with the at least one of the functional components (128, 130, 126, 140, 142, 150, 152), and perform the function at the electronic device.

11. The electronic device (100) according to claim 10, comprising at least one of:
a capacitive touch sensor (120) at the at least one of the functional components (128, 130, 126, 140, 142, 150, 152), the capacitive touch sensor (120) operably coupled to the processor (102) to detect the touch;
an accelerometer (136) operably coupled to the processor (102) to detect the touch, wherein the touch comprises a tap;
a microphone (130) operably coupled to the processor (102) to detect the touch, wherein the touch comprises a tap.

12. The electronic device (100) according to claim 10 or 11, wherein the touch comprises a gesture from a first one of the functional components (128, 130, 126, 140, 142, 150, 152) to a second one of the functional components (128, 130, 126, 140, 142, 150, 152).

13. The electronic device (100) according to any one of claims 10 to 12, comprising a button coupled to the processor (102) and wherein the function is performed in response to detecting the touch at the at least one of the functional components (128, 130, 126, 140, 142, 150, 152) and an input received from the button.

14. The electronic device (100) according to any one of claims 10 to 13, wherein the function is performed in response to detecting the touch at the at least one of the functional components (128, 130, 126, 140, 142, 150, 152) and in response to detecting a touch on the touch-sensitive display (118).

15. The electronic device (100) according to any one of claims 10 to 14, wherein an indication of the function is displayed on the touch-sensitive display (118).

## Patentansprüche

1. Ein Verfahren zum Steuern einer elektronischen Vorrichtung (100), die eine berührungsempfindliche Anzeige (118) und eine Vielzahl von funktionalen Komponenten (128, 130, 126, 140, 142, 150, 152) aufweist, wobei das Verfahren aufweist:
Erfassen einer Berührung an zumindest einer der funktionalen Komponenten (128, 130, 126, 140, 142, 150, 152) der elektronischen Vorrichtung (100);
Identifizieren einer Funktion, die mit der zumindest einen der funktionalen Komponenten (128, 130, 126, 140, 142, 150, 152) assoziiert ist; und
Durchführen der Funktion an der elektronischen Vorrichtung (100).

2. Das Verfahren gemäß Anspruch 1, das ein Anzeigen einer Angabe der Funktion auf der berührungsempfindlichen Anzeige (118) aufweist.

3. Das Verfahren gemäß Anspruch 1 oder 2, wobei das Erfassen der Berührung eines aufweist aus:
Erfassen der Berührung unter Verwendung von kapazitiven Berührungssensoren (120) der elektronischen Vorrichtung (100);
Erfassen einer Berührung auf einem Teil des Gehäuses (202) in der Nähe der zumindest einen funktionalen Komponente (128, 130, 126, 140, 142, 150, 152);
Erfassen eines Antippens unter Verwendung zumindest eines aus einem kapazitiven Berührungssensor (120), einem Beschleunigungsmesser (136) und einem Mikrofon (130).

4. Das Verfahren gemäß Anspruch 1 oder 2, wobei das Erfassen der Berührung ein Erfassen der Berührung an zwei der funktionalen Komponenten (128, 130, 126, 140, 142, 150, 152) aufweist.

5. Das Verfahren gemäß Anspruch 4, wobei das Erfassen der Berührung an zwei der funktionalen Komponenten (128, 130, 126, 140, 142, 150, 152) ein Erfassen einer Geste von einer ersten der funktionalen Komponenten (128, 130, 126, 140, 142, 150, 152) zu einer zweiten der funktionalen Komponenten (128, 130, 126, 140, 142, 150, 152) aufweist.

6. Das Verfahren gemäß einem vorhergehenden Anspruch, wobei das Identifizieren der Funktion ein Identifizieren der Funktion basierend auf Berührungsattributen aufweist.

7. Das Verfahren gemäß einem vorhergehenden Anspruch, das ein Erfassen einer Berührung an einer Taste vor einem Durchführen der Funktion aufweist und wobei die Funktion durchgeführt wird in Reaktion auf ein Erfassen der Berührung an der Taste und Erfassen der Berührung an der zumindest einen der funktionalen Komponenten (128, 130, 126, 140, 142, 150, 152), und wobei optional das Erfassen der Berührung an der Taste ein Erfassen einer Betätigung eines Schalters der Taste bzw. des Knopfes aufweist.

8. Das Verfahren gemäß einem vorhergehenden Anspruch, das ein Erfassen einer Berührung an einer virtuellen Taste auf der berührungsempfindlichen Anzeige (118) vor einem Durchführen der Funktion aufweist und wobei die Funktion in Reaktion auf ein Erfassen der Berührung an der Taste und ein Erfassen der Berührung an der zumindest einen der funktionalen Komponenten (128, 130, 126, 140, 142, 150, 152) durchgeführt wird.

9. Computerlesbares Medium (110) mit computerlesbarem Code, der durch zumindest einen Prozessor (102) der elektronischen Vorrichtung (100) ausführbar ist, um das Verfahren gemäß einem vorhergehenden Anspruch durchzuführen.

10. Eine elektronische Vorrichtung (100), die aufweist:
eine berührungsempfindliche Anzeige (118);
eine Vielzahl von funktionalen Komponenten (128, 130, 126, 140, 142, 150, 152); und
einen Prozessor (102), der mit der berührungsempfindlichen Anzeige (118) und mit den funktionalen Komponenten (128, 130, 126, 140, 142, 150, 152) gekoppelt ist und betriebsfähig ist zum Erfassen einer Berührung an zumindest einer der funktionalen Komponenten (128, 130, 126, 140, 142, 150, 152) einer elektronischen Vorrichtung (100), Identifizieren einer Funktion, die mit der zumindest einen der funktionalen Komponenten (128, 130, 126, 140, 142, 150, 152) assoziiert ist, und Durchführen der Funktion an der elektronischen Vorrichtung.

11. Die elektronische Vorrichtung (100) gemäß Anspruch 10, die zumindest eines aufweist aus:
einen kapazitiven Berührungssensor (120) an der zumindest einen der funktionalen Komponenten (128, 130, 126, 140, 142, 150, 152), wobei der kapazitive Berührungssensor (120) betriebsfähig mit dem Prozessor (102) gekoppelt ist, um die Berührung zu erfassen;
einen Beschleunigungsmesser (136), der betriebsfähig mit dem Prozessor (102) gekoppelt ist, um die Berührung zu erfassen, wobei die Berührung ein Antippen aufweist;
ein Mikrofon (130), das betriebsfähig mit dem Prozessor (102) gekoppelt ist, um die Berührung zu erfassen, wobei die Berührung ein Antippen aufweist.

12. Die elektronische Vorrichtung (100) gemäß Anspruch 10 oder 11, wobei die Berührung eine Geste von einer ersten der funktionalen Komponenten (128, 130, 126, 140, 142, 150, 152) zu einer zweiten der funktionalen Komponenten (128, 130, 126, 140, 142, 150, 152) aufweist.

13. Die elektronische Vorrichtung (100) gemäß einem der Ansprüche 10 bis 12, die eine Taste aufweist, die mit dem Prozessor (102) gekoppelt ist, und wobei die Funktion in Reaktion auf ein Erfassen der Berührung an der zumindest einen der funktionalen Komponenten (128, 130, 126, 140, 142, 150, 152) und einer Eingabe durchgeführt wird, die von der Taste empfangen wird.

14. Die elektronische Vorrichtung (100) gemäß einem der Ansprüche 10 bis 13, wobei die Funktion in Reaktion auf ein Erfassen der Berührung an der zumindest einen der funktionalen Komponenten (128, 130, 126, 140, 142, 150, 152) und in Reaktion auf ein Erfassen einer Berührung auf der berührungsempfindlichen Anzeige (118) durchgeführt wird.

15. Die elektronische Vorrichtung (100) gemäß einem der Ansprüche 10 bis 14, wobei eine Angabe der Funktion auf der berührungsempfindlichen Anzeige (118) angezeigt wird.

## Revendications

1. Procédé de commande d'un dispositif électronique (100) comprenant un dispositif d'affichage tactile (118) et une pluralité de composants fonctionnels (128, 130, 126, 140, 142, 150, 152), le procédé comprenant :
la détection d'un toucher d'au moins l'un des composants fonctionnels (128, 130, 126, 140, 142, 150, 152) du dispositif électronique (100) ;
l'identification d'une fonction associée à l'au moins un des composants fonctionnels (128, 130, 126, 140, 142, 150, 152) ; et
l'exécution de la fonction dans le dispositif électronique (100).

2. Procédé selon la revendication 1, comprenant l'affichage d'une indication de la fonction sur le dispositif d'affichage tactile (118).

3. Procédé selon la revendication 1 ou 2, dans lequel la détection du toucher comprend l'une parmi :
la détection du toucher à l'aide de capteurs de toucher capacitifs (120) du dispositif électronique (100) ;
la détection d'un toucher sur une partie du boîtier (202) au voisinage de l'au moins un composant fonctionnel (128, 130, 126, 140, 142, 150, 152) ;
la détection d'un tapotement à l'aide d'au moins l'un d'un capteur de toucher capacitif (120), d'un accéléromètre (136) et d'un microphone (130).

4. Procédé selon la revendication 1 ou 2, dans lequel la détection du toucher comprend la détection du toucher au niveau de deux des composants fonctionnels (128, 130, 126, 140, 142, 150, 152).

5. Procédé selon la revendication 4, dans lequel la détection du toucher au niveau de deux des composants fonctionnels (128, 130, 126, 140, 142, 150, 152) comprend la détection d'un geste à partir d'un premier des composants fonctionnels (128, 130, 126, 140, 142, 150, 152) vers un deuxième des composants fonctionnels (128, 130, 126, 140, 142, 150, 152).

6. Procédé selon l'une quelconque des revendications précédentes, dans lequel l'identification de la fonction comprend l'identification de la fonction en fonction des attributs de toucher.

7. Procédé selon l'une quelconque des revendications précédentes, comprenant la détection d'un toucher au niveau d'un bouton avant l'exécution de la fonction, et dans lequel la fonction est exécutée en réponse à la détection du toucher au niveau du bouton et à la détection du toucher au niveau de l'au moins un des composants (128, 130, 126, 140, 142, 150, 152), et, de façon optionnelle, dans lequel la détection du toucher au niveau du bouton comprend la détection de l'actionnement d'un commutateur du bouton.

8. Procédé selon l'une quelconque des revendications précédentes, comprenant la détection d'un toucher au niveau d'un bouton virtuel sur le dispositif d'affichage tactile (118) avant l'exécution de la fonction, et dans lequel la fonction est exécutée en réponse à la détection du toucher au niveau du bouton et de la détection du toucher au niveau de l'au moins un des composants fonctionnels (128, 130, 126, 140, 142, 150, 152).

9. Support lisible par ordinateur (110), comportant un code lisible par ordinateur exécutable par au moins un processeur (102) du dispositif électronique (100) de façon à exécuter le procédé selon l'une quelconque des revendications précédentes.

10. Dispositif électronique (100), comprenant :
un dispositif d'affichage tactile (118) ;
une pluralité de composants fonctionnels (128, 130, 126, 140, 142, 150, 152) ; et
un processeur (102) couplé au dispositif d'affichage tactile (118) et aux composants fonctionnels (128, 130, 126, 140, 142, 150, 152), ayant pour fonction de détecter un toucher au niveau d'au moins l'un des composants fonctionnels (128, 130, 126, 140, 142, 150, 152) d'un dispositif électronique (100), à identifier une fonction associée à l'au moins un des composants fonctionnels (128, 130, 126, 140, 142, 150, 152), et à exécuter la fonction dans le dispositif électronique.

11. Dispositif électronique (100) selon la revendication 10, comprenant au moins l'un parmi :
un capteur de toucher capacitif (120) au niveau d'au moins l'un des composants fonctionnels (128, 130, 126, 140, 142, 150, 152), le capteur de toucher capacitif (120) étant couplé de façon fonctionnelle au processeur (102) de façon à détecter le toucher ;
un accéléromètre (136) couplé de façon fonctionnelle au processeur (102) de façon à détecter le toucher, le toucher comprenant un tapotement ;
un microphone (130) couplé de façon fonctionnelle au processeur (102) de façon à détecter le toucher, le toucher comprenant un tapotement.

12. Dispositif électronique (100) selon la revendication 10 ou 11, dans lequel le toucher comprend un geste à partir d'un premier des composants fonctionnels (128, 130, 126, 140, 142, 150, 152) vers un deuxième des composants fonctionnels (128, 130, 126, 140, 142, 150, 152).

13. Dispositif électronique (100) selon l'une quelconque des revendications 10 à 12, comprenant un bouton couplé au processeur (102), et dans lequel la fonction est exécutée en réponse à la détection du toucher au niveau de l'au moins un des composants fonctionnels (128, 130, 126, 140, 142, 150, 152) et d'une entrée reçue à partir du bouton.

14. Dispositif électronique (100) selon l'une quelconque des revendications 10 à 13, dans lequel la fonction est exécutée en réponse à la détection du toucher au niveau de l'au moins un des composants fonctionnels (128, 130, 126, 140, 142, 150, 152) et en réponse à la détection d'un toucher sur le dispositif d'affichage tactile (118).

15. Dispositif électronique (100) selon l'une quelconque des revendications 10 à 14, dans lequel une indication de la fonction est affichée sur le dispositif d'affichage tactile (118).
